# FASCICULE DE BREVET EUROPEEN

(11) **EP 4 425 115 B1**
(45) Date de publication et mention de la délivrance du brevet: **23.04.2025**
(21) Numéro de dépôt: 24157889.7
(22) Date de dépôt: 15.02.2024
(51) Int. Cl.: G01F 15/12, B01D 46/24

(54) **FILTRE ANTI-POUSSIERE POUR COMPTEUR DE GAZ**
STAUBFILTER FÜR GASZÄHLER
DUST FILTER FOR GAS METER

(30) Priorité: 28.02.2023 FR 2301853
(43) Date de publication de la demande: 04.09.2024
(73) Titulaire: SAGEMCOM ENERGY & TELECOM SAS, 92270 Bois-Colombes (FR)
(72) Inventeur: SABRAOUI, Abbas, 92270 BOIS-COLOMBES (FR)
(74) Mandataire: Cabinet Boettcher

(56) Documents cités:
- WO-A1-2016/147445
- CN-U- 217 032 645
- FR-A1- 2 721 360
- FR-A1- 2 755 232
- US-A1- 2021 231 481
- US-A1- 2022 146 297

## Description

L'invention concerne le domaine des compteurs de gaz, et notamment des compteurs de gaz à ultrasons.

### ARRIERE PLAN DE L'INVENTION

Un compteur de gaz comporte très classiquement un module de mesure destiné à mesurer un débit du gaz qui circule dans le compteur.

Or, il est connu que les gaz, dont on cherche à mesurer le débit en utilisant un tel compteur, transportent une quantité non négligeable de particules de poussières diverses.

Les mesures réalisées par le module de mesure d'un compteur de gaz peuvent être perturbées par la présence de ces particules de poussières. C'est en particulier le cas pour les modules de mesure ultrasoniques.

Il arrive ainsi fréquemment que des particules de poussières se déposent sur les transducteurs ultrasonores et sur les parois du conduit de mesure dans lequel circule le gaz et dans lequel les transducteurs émettent les signaux ultrasonores. Ce phénomène a pour effet de perturber le fonctionnement du module de mesure et d'affecter la précision des mesures métrologiques. L'erreur de mesure résultant de la présence de poussière peut aller jusqu'à 4 à 5 %.

On connaît une solution de l'art antérieur qui propose, pour pallier ce problème, d'intégrer le conduit de mesure dans une chambre élargie à l'intérieur du compteur, et de faire circuler le gaz dans la chambre élargie, avant de rentrer dans le conduit de mesure, en passant par un canal coudé. Les poussières tombent alors par gravité dans une zone de dépôt de poussière, située dans la chambre élargie à l'extérieur du conduit de mesure. La demande de brevet US2022146297A1 présente un compteur de gaz de l'art antérieur équipé d'un filtre de ce type.

Cependant, comme la zone de dépôt de poussière est très proche de l'entrée du conduit de mesure, la poussière légère tend à être aspirée dans le conduit de mesure lorsque le débit de gaz est élevé, et risque alors de se déposer sur les transducteurs, et donc de perturber les mesures de débit réalisées par le module de mesure. Cette solution n'est donc pas satisfaisante.

### OBJET DE L'INVENTION

L'invention a pour objet d'améliorer la précision des mesures de débit de gaz réalisées par un compteur de gaz, le gaz transportant des particules de poussières.

### RESUME DE L'INVENTION

En vue de la réalisation de ce but, on propose un filtre anti-poussière, agencé pour être installé dans un compteur de gaz en amont d'un module de mesure mesurant un débit d'un gaz, le filtre comportant un boîtier à l'intérieur duquel sont définies une première chambre et une deuxième chambre, la première chambre étant située au-dessus de la deuxième chambre lorsque le filtre est installé dans le compteur, le boîtier comprenant un orifice d'entrée et des orifices de sortie pratiqués au niveau de la première chambre, un média filtrant étant installé dans la première chambre, le filtre étant ainsi agencé de sorte que, lorsqu'il est installé dans le compteur, le gaz pénètre dans le filtre via l'orifice d'entrée, passe dans le média filtrant, et sort du filtre via les orifices de sortie, des particules de poussière contenues dans le gaz se déposant alors sur un fond de la deuxième chambre.

Le filtre anti-poussière permet donc de filtrer les poussières contenues dans le gaz.

La chute des poussières lourdes (par gravité) au fond de la deuxième chambre est favorisée par les positions relatives de la première chambre et de la deuxième chambre. Les poussières plus légères sont filtrées par le média filtrant. La poussière est donc piégée dans le boîtier du filtre et n'en ressort pas.

Le filtre est situé en amont du module de mesure, de sorte que tout le gaz pénétrant dans le module de mesure a été préalablement filtré. Les mesures de débit sont donc très peu perturbées par la présence de poussière.

Le filtre peut être positionné dans le compteur à proximité de l'entrée de gaz et à distance du module de mesure, ce qui limite encore la pénétration de poussières dans le module de mesure.

Selon l'invention, le boîtier comprend une première enveloppe à l'intérieur de laquelle est située la première chambre et une deuxième enveloppe à l'intérieur de laquelle est située la deuxième chambre, qui sont fixées l'une à l'autre, la première enveloppe comprenant une face supérieure dans laquelle est formé l'orifice d'entrée, et une première portion, de forme générale cylindrique, dans laquelle sont formés les orifices de sortie.

Optionnellement, le média filtrant a une forme tubulaire comprenant une portion centrale évidée et présentant un axe longitudinal confondu avec un axe longitudinal du filtre, la deuxième enveloppe comprenant une deuxième portion, de forme générale cylindrique, et une face inférieure formant le fond de la deuxième chambre, la deuxième enveloppe comprenant de plus une pluralité de branches qui s'étendent depuis une circonférence d'une extrémité de la deuxième portion opposée à la face inférieure, les branches étant parallèles à un axe longitudinal du filtre, le filtre étant agencé, lorsqu'il est assemblé, de sorte que les branches s'étendent dans la portion centrale évidée du média filtrant en comprimant le média filtrant contre une paroi interne de la première portion de la première enveloppe

Optionnellement, la première enveloppe comprend des languettes, formées dans l'épaisseur de la première portion et selon une longueur de celle-ci, chaque languette s'étendant depuis la face supérieure de la première enveloppe jusqu'à une extrémité de la première enveloppe opposée à la face supérieure, l'extrémité libre de chaque languette comprenant un crochet permettant de fixer la première enveloppe et la deuxième enveloppe par emboîtage élastique. Optionnellement, les orifices de sortie comprennent des premiers orifices adjacents aux languettes, et des deuxièmes orifices non adjacents aux languettes, les premiers orifices étant plus larges que les deuxièmes orifices.

Optionnellement, ladite extrémité de la deuxième portion a une forme en collerette comprenant des trous dans lesquels pénètrent les crochets des languettes de la première enveloppe.

Optionnellement, la face supérieure du boîtier comporte une nervure qui entoure l'orifice d'entrée et qui est munie d'excroissances radiales agencées pour fixer le filtre dans le compteur via un montage à baïonnette.

Optionnellement, le filtre comporte en outre un aimant positionné sur le fond de la deuxième chambre et agencé pour attirer des particules de poussières métalliques.

Optionnellement, le boîtier est fabriqué en polyoxyméthylène.

Optionnellement, le média filtrant est un média polyester.

L'invention concerne également un compteur de gaz comprenant un module de mesure agencé pour mesurer un débit d'un gaz, et un filtre anti-poussière tel que précité, le filtre étant installé en amont du module de mesure de sorte que tout le gaz qui pénètre dans le module de mesure a été préalablement filtré par le filtre.

Optionnellement, le compteur comprend un connecteur d'entrée par lequel entre le gaz dans le compteur et un connecteur de sortie par lequel sort le gaz du compteur, le compteur étant agencé de sorte que, lorsque le compteur est installé dans une position nominale, le connecteur d'entrée et le filtre s'étendant successivement de haut en bas selon un axe vertical, un conduit de mesure du module de mesure et le connecteur de sortie s'étendant successivement de bas en haut selon un deuxième axe vertical.

Optionnellement, le compteur comprend en outre une vanne électromécanique positionnée entre le connecteur d'entrée et le filtre, à laquelle est fixée le filtre.

Optionnellement, le compteur comporte en outre un dispositif de mesure de pression comprenant un boîtier à l'intérieur duquel est intégré un capteur de pression différentielle, le boîtier comprenant un premier port de pression débouchant dans la deuxième chambre du filtre et un deuxième port de pression débouchant dans une cuve du compteur à l'extérieur du filtre.

Optionnellement, le compteur comprend une unité de traitement agencée pour comparer avec un seuil de référence une différence de pression entre une première mesure de pression produite par une première cellule sensible du capteur de pression différentielle qui est en communication fluidique avec la deuxième chambre via le premier port de pression et une deuxième mesure de pression produite par une deuxième cellule sensible du capteur de pression différentielle qui est en communication fluidique avec la cuve via le deuxième port de pression, et pour produire un message d'alarme si la différence de pression est supérieure audit seuil de référence.

L'invention sera mieux comprise à la lumière de la description qui suit de modes de mise en œuvre particuliers non limitatifs de l'invention.

### BREVE DESCRIPTION DES DESSINS

Il sera fait référence aux dessins annexés parmi lesquels :
[Fig. 1] la figure 1 est une vue de l'intérieur d'un compteur de gaz intégrant le filtre anti-poussière ;
[Fig. 2] la figure 2 représente une vue en perspective et de dessus de la première enveloppe, une vue de dessus de la deuxième enveloppe, et une vue du filtre assemblé ;
[Fig. 3] la figure 3 est une vue en perspective de la première enveloppe, du média filtrant et de la deuxième enveloppe ;
[Fig. 4] la figure 4 est un graphique comprenant des courbes de l'erreur de mesure en fonction du débit de gaz ;
[Fig. 5] la figure 5 est une vue similaire à la figure 1, le filtre anti-poussière intégrant un aimant ;
[Fig. 6] la figure 6 est une vue en coupe selon un plan vertical d'un compteur, qui comprend de plus un dispositif de mesure de pression ;
[Fig. 7] la figure 7 représente le dispositif de mesure de pression.

### DESCRIPTION DETAILLEE DE L'INVENTION

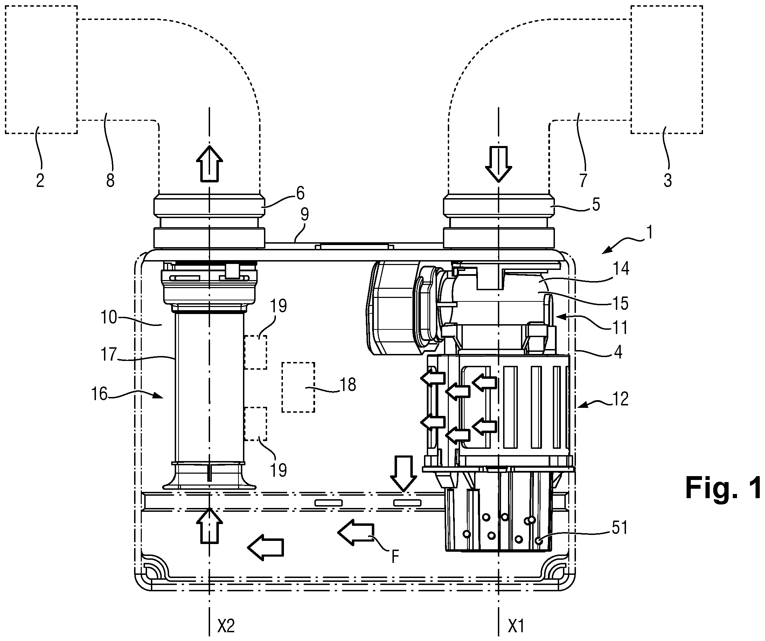

En référence à la figure 1, le compteur 1 est un compteur de gaz « intelligent » (*smart meter*), à ultrasons. Le compteur 1 est utilisé pour mesurer la consommation de gaz d'une installation 2. Le gaz est fourni à l'installation par un réseau de distribution 3.

Le compteur 1 comporte un boîtier 4 qui comprend un connecteur d'entrée 5 et un connecteur de sortie 6. Le connecteur d'entrée 5 permet de raccorder au compteur 1 un tuyau 7 qui relie le réseau de distribution 3 au compteur 1. Le connecteur de sortie 6 permet de raccorder au compteur 1 un tuyau 8 qui relie le compteur 1 à l'installation 2.

La position du compteur 1 représentée sur la figure 1 est la position nominale du compteur 1, c'est-à-dire la position de fonctionnement qu'il occupe lorsqu'il est en service et positionné correctement. Dans ce texte, à chaque fois que l'on emploie un terme de positionnement à propos d'un objet (supérieur, inférieur, etc.), on se réfère à la position nominale, en service, de cet objet.

Le connecteur d'entrée 5 et le connecteur de sortie 6 sont situés sur une face supérieure 9 du boîtier 4 du compteur 1.

Une cuve 10 est définie à l'intérieur du boîtier 4.

Le connecteur d'entrée 5 débouche dans la cuve 10.

La compteur 1 comporte une vanne électromécanique 11 et un filtre anti-poussière 12, qui sont positionnés dans la cuve 10.

La vanne électromécanique 11 est une vanne à bille qui comprend un conduit 14 et une bille 15 positionnée dans le conduit 14. La position angulaire de la bille 15 peut être commandée à distance, ce qui permet de couper, de limiter ou de rétablir le débit de gaz à fourni à l'installation 2.

La vanne 11 est connectée au connecteur d'entrée 5.

Le filtre anti-poussière 12 sera décrit en détail plus bas.

Lorsque le compteur 1 est positionné dans sa position nominale, le connecteur d'entrée 5, le conduit 14 de la vanne 11 et le filtre 12 s'étendent successivement, de haut en bas, selon un axe vertical X1.

Le compteur comporte de plus un module de mesure 16. Le module de mesure 16 comporte un conduit de mesure 17, une unité de traitement 18 et deux transducteurs ultrasonores 19 (représentés schématiquement sur la figure 1 et dans des positions non représentatives de la réalité).

L'unité de traitement 18 est située en dehors de la cuve 10. Elle est intégrée dans une carte électronique du compteur 1, qui n'est pas nécessairement dédiée uniquement à la mesure de débit. L'unité de traitement 18 comprend au moins un composant de traitement (électronique et/ou logiciel), qui est par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*) . L'unité de traitement 18 comprend aussi un générateur de signal d'excitation, et un récepteur de signaux.

Le module de mesure 16 fonctionne de la manière suivante. Chaque transducteur ultrasonore 19 joue successivement le rôle d'un émetteur et d'un récepteur. L'unité de traitement 18 génère un signal électrique d'excitation et l'applique aux bornes d'un transducteur émetteur. L'émetteur émet dans le conduit de mesure 17 un signal ultrasonore, qui est capturé par le récepteur après avoir parcouru un chemin de longueur prédéfinie dans le conduit de mesure 17. Puis, le transducteur récepteur devient à son tour émetteur et émet un signal ultrasonore, qui est capturé par l'autre transducteur après avoir parcouru le même chemin, en sens inverse.

L'unité de traitement 18 déduit des signaux reçus la vitesse du gaz et donc le débit du gaz.

La sortie du conduit de mesure 17 est connectée au connecteur de sortie 6.

L'axe longitudinal du conduit de mesure 17 est un axe vertical X2, parallèle à l'axe X1.

Le conduit de mesure 17 et le connecteur de sortie 6 s'étendent successivement, de bas en haut, selon l'axe X2.

Le gaz rentre dans le compteur 1 via le connecteur d'entrée 5. Il passe dans le conduit 14 de la vanne 11, puis dans le filtre 12, puis dans la cuve 10. Il pénètre alors dans le conduit de mesure 17 et sort du compteur 1 via le connecteur de sortie 6.

On s'intéresse maintenant au filtre anti-poussière 12.

Le filtre anti-poussière 12 est donc installé dans le compteur 1 en amont du module de mesure 16. Ici, les termes « amont » et « aval » sont définis par rapport au sens de circulation du gaz dans le compteur 1.

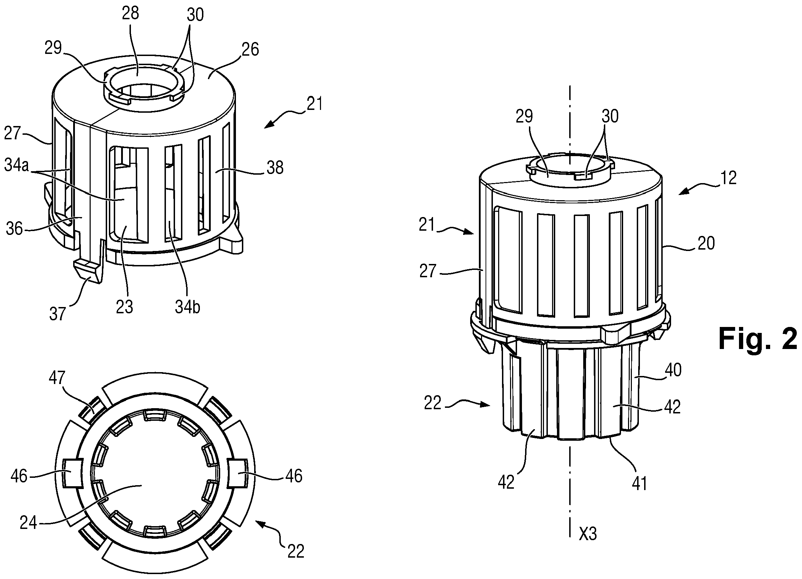

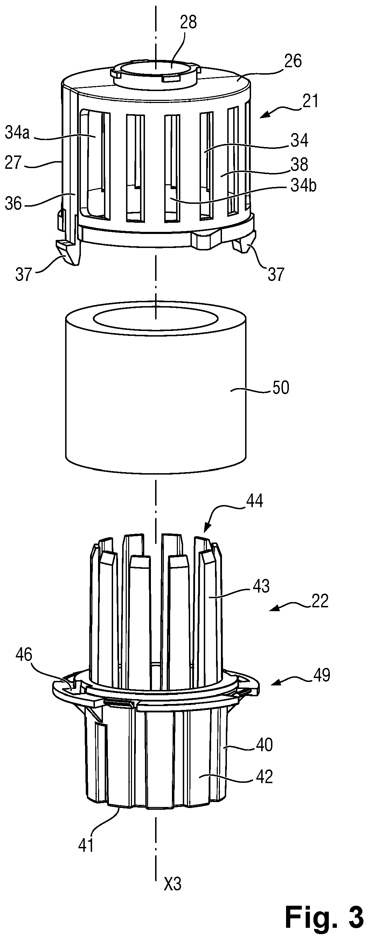

En référence aux figures 2 et 3, le filtre 12 comporte un boîtier 20 comprenant une première enveloppe 21 et une deuxième enveloppe 22, qui sont deux éléments de boîtier distincts.

A l'intérieur du boîtier 20 sont définies une première chambre 23 et une deuxième chambre 24. La première chambre 23 est située à l'intérieur de la première enveloppe 21 et la deuxième chambre 24 est située à l'intérieur de la deuxième enveloppe 21.

Lorsque le filtre 12 est installé dans le compteur 1, la première enveloppe 21, et donc la première chambre 23, sont situées au-dessus de la deuxième enveloppe 22, et donc de la deuxième chambre 24.

La première enveloppe 21 comprend une face supérieure 26 et une première portion 27 de forme générale cylindrique.

La face supérieure 26 comprend en son centre un trou circulaire 28 formant un orifice d'entrée. Une nervure 29 de forme circulaire s'étend autour du trou 28, au niveau de sa circonférence, en saillant verticalement de la face supérieure 26. Une pluralité d'excroissances radiales 30, ici quatre excroissances radiales 30, régulièrement réparties, s'étendent depuis une extrémité libre de la nervure 29 vers l'extérieur (à l'opposé du trou 28).

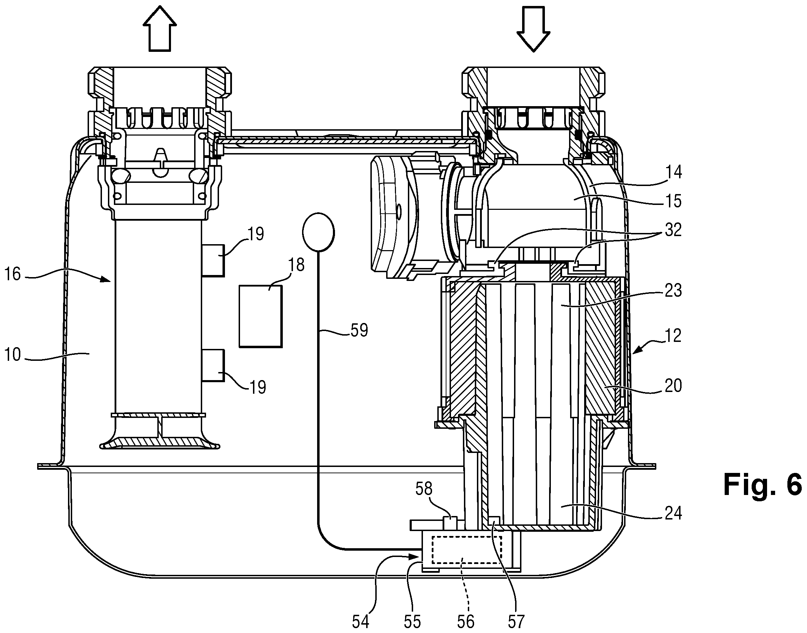

L'extrémité inférieure du conduit 14 de la vanne 11 comprend au niveau de son ouverture des gorges 32 (visibles seulement sur la figure 6), en l'occurrence quatre gorges 32, formées à l'intérieur du conduit 14 et qui s'étendent selon une circonférence de l'ouverture.

La nervure 29 et les excroissances radiales 30 permettent de fixer via un montage à baïonnette le filtre 12 à l'extrémité inférieure du conduit 14. Pour fixer le filtre 12 à la vanne 11, on positionne le filtre 12 sous la vanne 11, on insère les excroissances radiales 30 de la nervure 29 de la première enveloppe 21 dans les gorges 32, et on tourne le filtre 12 d'un quart de tour autour de son axe longitudinal X3 (qui est confondu avec l'axe X1 lorsque le filtre 12 est installé dans le compteur 1).

Le boîtier 20 comprend aussi des orifices de sortie 34 pratiqués au niveau de la première chambre 23. Les orifices de sortie 34 sont formés dans la première portion 27 (de forme générale cylindrique). Les orifices de sortie 34 sont de forme longitudinale selon une hauteur de la première portion 27 : la longueur des orifices de sortie 34 est parallèle à l'axe X3. Les orifices de sortie 34 sont positionnés sur tout le tour de la première portion 27.

La première enveloppe 21 comprend de plus une pluralité de languettes 36, ici deux languettes 36, formées dans l'épaisseur de la première portion 27 et selon une longueur de celle-ci. Chaque languette 36 s'étend depuis la face supérieure 26 de la première enveloppe 21 jusqu'à l'extrémité libre de la première enveloppe 21, opposée à la face supérieure 26. L'extrémité libre de chaque languette 36 comprend un crochet 37 permettant de fixer la première enveloppe 21 et la deuxième enveloppe 22 par emboîtage élastique.

Comme on le voit sur les figures 2 et 3, les orifices de sortie 34 sont définis entre des barreaux 38 qui s'étendent depuis la face supérieure 26 de la première enveloppe 21 jusqu'à son extrémité libre. Les orifices de sortie 34 sont des évidements pratiqués dans la première portion 27 entre les barreaux 38. Les deux languettes 36 jouent aussi le rôle de barreaux, mais sont plus larges que les autres barreaux 36.

Les orifices de sortie 34 comprennent des premiers orifices 34a ayant un bord qui est aussi un bord d'une languette 36, et des deuxièmes orifices 34b qui n'ont pas de bord qui est aussi un bord d'une languette 36. Les deuxièmes orifices 34b sont donc définis entre deux barreaux 38 qui ne sont pas des languettes 36. Les premiers orifices 34a sont plus larges que les deuxièmes orifices 34b.

La deuxième enveloppe 22, quant à elle, comprend une deuxième portion 40, de forme générale cylindrique, et une face inférieure 41, formant le fond de la deuxième chambre 24, et donc du boîtier 20 du filtre 12. La deuxième chambre 24 est située à l'intérieur de la deuxième portion 40.

La deuxième portion 40 comprend des renforts latéraux 42 qui s'étendent longitudinalement selon la hauteur de la deuxième portion 40.

La deuxième enveloppe 22 comprend de plus une pluralité de branches 43 qui s'étendent depuis une circonférence d'une extrémité 49 de la deuxième portion 40 opposée à la face inférieure 41, et qui sont réparties régulièrement sur la circonférence de ladite extrémité 49. Les branches 43 sont parallèles à l'axe longitudinal de la deuxième enveloppe 22. La portion extrémale 44 de chaque branche 43, au niveau de l'extrémité libre de la branche 43, comporte une surface externe en pente et inclinée vers l'extrémité libre de sorte que l'épaisseur de la portion extrémale 44 se réduit progressivement.

L'extrémité 49 de la deuxième portion 40 de la deuxième enveloppe 22 a une forme en collerette qui comprend deux trous 46 et quatre gorges 47 qui s'étendent le long de la collerette et donc selon la circonférence externe de l'extrémité 49 de la deuxième portion 40.

Le média filtrant 50, quant à lui, a une forme tubulaire comprenant une portion centrale évidée. Son axe longitudinal est confondu avec celui de la première enveloppe 21 et avec l'axe longitudinal X3 du filtre 12 lorsque le filtre 12 est assemblé. La hauteur du média filtrant 50 est égale à celle de la première portion 27 de la première enveloppe 21.

L'assemblage du filtre 12 est réalisé de la manière suivante. Le média filtrant 50 est enfilé sur la deuxième enveloppe 22 de sorte que les branches 43 de la deuxième enveloppe 22 sont insérées dans la portion centrale évidée du média filtrant 50. La réduction d'épaisseur des extrémités libres des branches 43 facilite cette insertion. Puis, la première enveloppe 21 vient coiffer le média filtrant 50. Les crochets 37 des languettes 36 de la première enveloppe 21 pénètrent dans les trous 46 de la collerette de la deuxième enveloppe 22 ce qui permet de fixer entre elles la première enveloppe 21 et la deuxième enveloppe 22 par emboîtage élastique. Le bord de l'extrémité libre de la première enveloppe 21 se positionne dans les gorges 47.

Lorsque le filtre 12 est assemblé, les branches 43 compriment le média filtrant 50 contre la paroi interne de la première portion 27 de la première enveloppe 21.

L'assemblage du filtre 12 est donc facile, rapide, et ne nécessite aucune machine d'assemblage complexe.

Le filtre 12 est intégré dans le compteur 1 en étant fixé à la vanne 11 en utilisant le montage à baïonnette. Le montage à baïonnette permet une intégration facile et rapide du filtre 12 dans le compteur 1 tout en ayant une sécurité de verrouillage et une résistance aux vibrations et aux chutes.

On décrit plus précisément le trajet du gaz dans le compteur, qui suit les flèches F.

Le gaz, après être entré dans le compteur 1, passe dans le conduit 14 de la vanne 11 puis pénètre dans le filtre 12 via l'orifice d'entrée 28 de la première enveloppe 21 du boîtier 20. Il traverse le média filtrant 50 et ressort du filtre 12 via les orifices de sortie 34 de la première enveloppe 21. Le gaz se répand alors dans la cuve 10 et pénètre dans le conduit de mesure 17 du module de mesure 16. Tout le gaz qui pénètre dans le module de mesure 16 a donc été filtré. Le gaz sort du compteur 1 via l'orifice de sortie 6.

La position verticale du filtre 12 et le positionnement des chambres 23, 24 l'une au-dessus de l'autre favorise la chute, au fond de la deuxième chambre 24, des particules de poussières lourdes 51 contenues dans le gaz.

Les particules de poussières les plus légères sont laissées en suspension et sont filtrées par le média filtrant 50.

On a vu plus haut que, parmi les orifices de sortie 34, les premiers orifices 34a, adjacents aux languettes 36, sont plus larges que les deuxièmes orifices 34b, non adjacents aux languettes 36. Ceci permet de compenser la perte de filtrage résultant de la présence des languettes 36, qui sont plus larges que les autres barreaux 38. On améliore ainsi le filtrage.

La deuxième chambre 24, qui forme un piège pour la poussière, et en particulier pour la poussière lourde, peut ici piéger jusqu'à 180 grammes de poussière (sachant que l'exigence normative est de 20 grammes).

On s'intéresse maintenant aux matériaux utilisés pour fabriquer le filtre 12.

La première enveloppe 21 et la deuxième enveloppe 22 du boîtier 20 sont ici toutes deux fabriquées en polyoxyméthylène (ou « POM »), qui est un thermoplastique semi-cristallin. D'autres types de plastique pourraient être utilisés mais le POM présente plusieurs avantages qui le rendent parfaitement adapté à l'utilisation dans un compteur de gaz. Le POM présente par exemple :
- une bonne stabilité dimensionnelle en fonction de la température ;
- une bonne résistance aux produits chimiques agressifs (par exemple à l'ammoniaque et au soufre) ;
- une résistance élevée à la fatigue et à l'usure ;
- une facilité de moulage : le POM est facile à mouler, ce qui en fait un matériau idéal pour les pièces mécaniques de précision.

Le média filtrant 50 est ici un filtre média synthétique.

Les avantage du filtre média synthétique sont :
- une grande résistance à l'abrasion et à la déchirure ;
- une forte capacité de rétention de particules, qui peut être ajustée en fonction des besoins spécifiques ;
- il peut être utilisé dans des conditions de température et de pression extrêmes ;
- il présente une faible résistance à l'air, ce qui permet un débit d'air élevé et une faible perte de charge ;
- ce type de média filtrant est résistant à la plupart des produits chimiques et des agents corrosifs.

Bien évidemment, les performances du média filtrant 50 vont dépendre de plusieurs paramètres comme :
- son épaisseur : de quelques mm à quelques cm ;
- la taille des pores : il est important de choisir un filtre avec une taille de pores suffisamment petite pour retenir les particules de poussière métallique. Le média filtrant a ici des pores de taille inférieure à la taille des particules à filtrer, c'est-à-dire de taille inférieure à 400 µm (le diamètre des particules de poussière métallique présentes dans le gaz varie entre 0,1 µm et 400 µm) ;
- la rétention de particules : il est également important de choisir un filtre ayant une forte capacité de rétention de particules pour retenir efficacement les poussières métalliques (exemple : 400 g/m2) ;
- la perte de charge en fonction du débit : il est important de choisir un filtre ayant une faible résistance à l'air pour éviter des chutes de pression du gaz chez le consommateur final (exemple : 0,0002 mbar/m3).

Le média filtrant 50 choisi est ici un média filtrant synthétique ayant les caractéristiques suivantes :
- épaisseur : 8 mm ;
- composition : fibres 100 polyester ;
- classe : G3 ou G4 ;
- capacité de rétention de poussière : 400 g/m2 ;
- stabilité thermique : 100°C ;
- perte de charge initiale : 0,0002 bar/m3.

La classe G3 est une norme européenne utilisée pour classer les filtres à air selon leur capacité de filtrage. Elle indique que le filtre a une efficacité de filtrage minimale de 50% pour les particules de 0,3 à 1 micron. Cela signifie que si 100% des particules de cette taille sont présentes dans l'air, au moins 50% seront retenues par le filtre.

La classe G4 est une norme européenne utilisée pour classer les filtres à air selon leur capacité de filtrage. Elle indique que le filtre a une efficacité de filtrage minimale de 85% pour les particules de 0,3 à 1 micron. Cela signifie que si 100% des particules de cette taille sont présentes dans l'air, au moins 85% seront retenues par le filtre.

On s'intéresse maintenant à l'évaluation des performances du filtre 12 qui a été décrit et de son intégration dans le compteur de gaz 1.

Comme on l'a vu, l'inconvénient principal de la présence de poussière est la dégradation de la précision de la mesure du débit de gaz.

On a réalisé dans un laboratoire certifié un test normatif de résistance à la poussière pour évaluer les performances du filtre 12. Ce test consiste à mesurer la précision du compteur 1 en présence de 20 grammes de poussière (exigence normative).

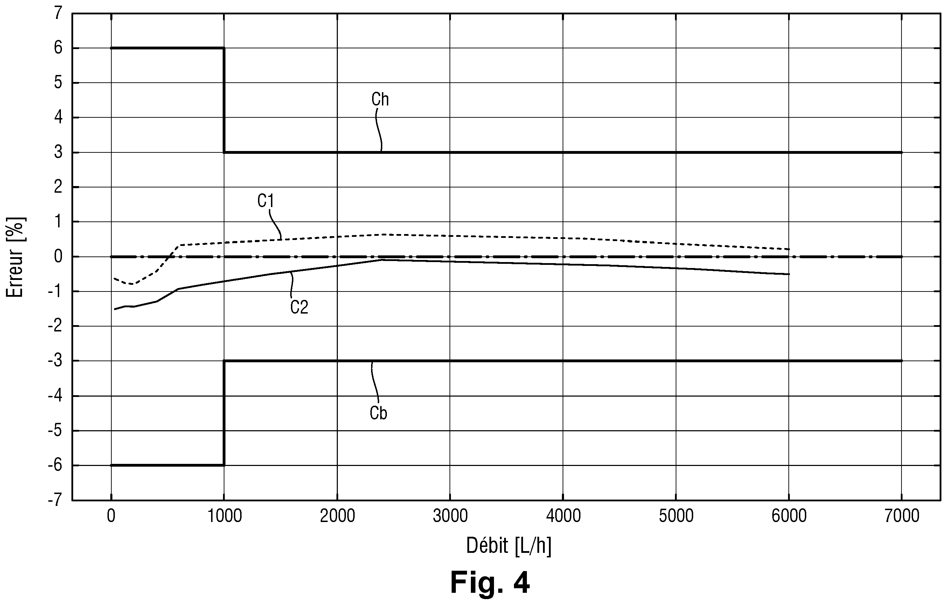

Les résultats obtenus sont visibles sur la figure 4.

Pour que le test soit réussi, la courbe de l'erreur en fonction du débit doit demeurer à l'intérieur d'un gabarit métrologique défini par une courbe limite haute Ch et une courbe limite basse Cb.

La courbe C1 représente l'évolution de l'erreur en fonction du débit avant le test normatif de résistance à la poussière, c'est-à-dire avant l'introduction de la poussière.

La courbe C2 représente l'évolution de l'erreur en fonction du débit après l'introduction de la poussière. On voit que la précision a été très légèrement dégradée par le test. L'erreur métrologique est dégradée en moyenne de 0,65% mais reste dans le gabarit métrologique et est donc conforme à la norme.

On a aussi vérifié que la présence du filtre ne provoque pas une perte de charge inacceptable.

En effet, selon la norme EN 14236, le compteur doit avoir une perte de charge inférieure à 2 mbar au débit maximal. La norme EN 14236 est une norme européenne qui définit les exigences pour les compteurs de gaz à ultrasons. Elle couvre les exigences de performances, les exigences de sécurité, les exigences de fiabilité et les exigences de compatibilité électromagnétique pour les compteurs de gaz à ultrasons. Les exigences de performances incluent la précision de mesure, la stabilité de mesure, la température de fonctionnement, la pression de fonctionnement, la compatibilité électromagnétique, la résistance à la poussière, et les exigences en matière de sécurité incluent les exigences liées à la sécurité électrique et à la sécurité incendie.

On rappelle que les compteurs de type G6 ont un débit minimal de 0,06 m³/h et un débit maximal de 10 m³/h. Les compteurs de type G4 ont un débit minimal de 0,04 m³/h et un débit maximal de 6 m³/h. Les compteurs G6 sont adaptés pour des consommations de gaz plus élevées que les compteurs G4.

La perte de charge peut augmenter après le test normatif de « résistance à la poussière » mais il doit rester inférieur à 2,2 mbar au débit maximal.

La perte de charge de référence à Qmax (débit maximal) est de : 1 mbar.

La perte de charge après le test « résistance à la poussière » à Qmax (débit maximal) est de : 1,05 mbar.

On note que l'écart entre les deux pertes de charge est négligeable ce qui prouve que le concept est validé et que le filtre n'est pas encrassé.

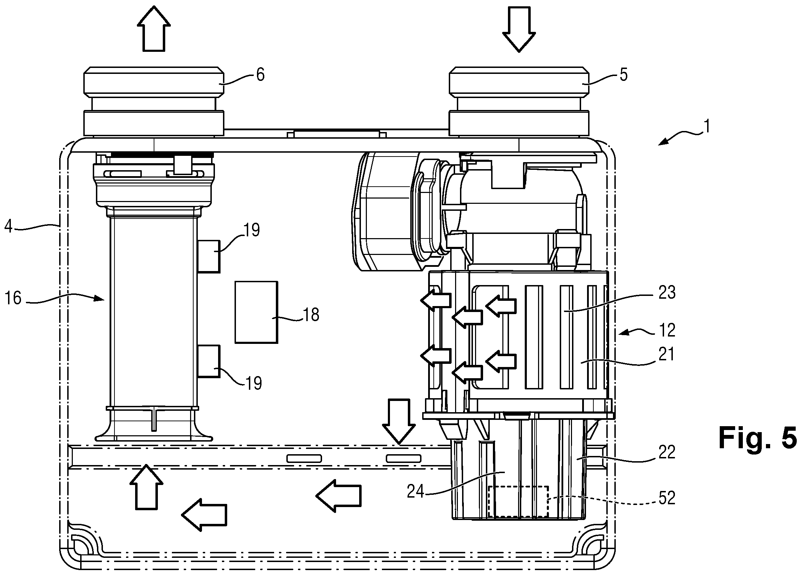

Dans un deuxième mode de réalisation, visible sur la figure 5, le filtre comprend un aimant 52. Il pourrait aussi comprendre une pluralité d'aimants 52.

Avantageusement, le ou les aimants 52 sont situés dans la deuxième chambre 24. Ici, le filtre 12 comprend un seul aimant 52 qui est positionné sur le fond de la deuxième chambre 24, en étant collé à celui-ci. Tout moyen de fixation peut être utilisé pour fixer le ou les aimants.

L'ajout d'un ou de plusieurs aimants 52 dans la deuxième chambre 24 augmente les performances du filtre 12 en augmentant la force de retenue des particules de poussière. Le ou les aimants 52 créent un champ magnétique qui attire les particules de poussières métalliques, telles que les particules de fer (sachant que 92% de la poussière utilisée pour les tests de certification dans un compteur de gaz sont des particules de fer).

Ces particules de poussière sont alors piégées par le filtre 12, ce qui augmente son efficacité de filtrage. Les aimants 52 peuvent également aider à diminuer la perte de charge due à l'accumulation de particules de poussière sur le filtre, ce qui peut également améliorer les performances du filtre.

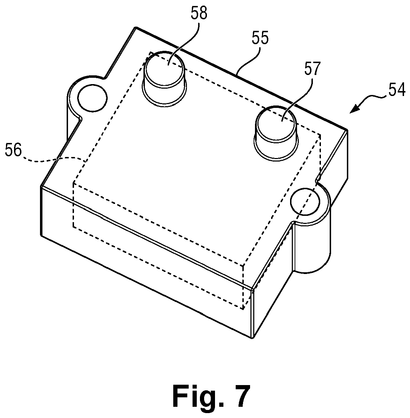

Dans un troisième mode de réalisation, visibles sur les figures 6 et 7, le compteur 1 intègre un dispositif de mesure de pression 54.

Le dispositif de mesure de pression 54 comprend un boîtier 55 à l'intérieur duquel est intégré un capteur de pression différentielle 56. Le boîtier 55 comprend une face supérieure comprenant un premier port de pression 57 et un deuxième port de pression 58. Le boîtier 55 est positionné de sorte que le premier port de pression 57 débouche dans la deuxième chambre 24 du filtre 12, et de sorte que le deuxième port 58 de pression débouche dans la cuve 10 à l'extérieur du filtre 12 et en aval du filtre 12.

Le capteur de pression différentielle 56 comprend une première cellule sensible qui est en communication fluidique avec la deuxième chambre 24 via le premier port de pression 57, et une deuxième cellule sensible qui est en communication fluidique avec la cuve 10 via le deuxième port de pression 58.

Diffèrent types de capteurs peuvent être utilisés pour mesurer la pression, comme les capteurs capacitifs, piézorésistifs ou à diaphragme. Au vu de la faible pression que l'on souhaite mesurer, un capteur de pression différentielle de type MEMS sera par exemple utilisé ici, et par exemple le modèle « *MEMS Digital Differential Ultra Low Pressure Sensor FSP1000* », qui présente les caractéristiques suivantes :
- plage de pression : 5 à 500 Pascal ;
- tension d'alimentation : 3 à 5,5 Volts ;
- sortie : analogique ou bus I2C ;
- précision : ± 2% de la pleine échelle ;
- humidité : < 95% ;
- température de fonctionnement : -20 à 70°C.

Le capteur de pression différentielle 56 est connecté à l'unité de traitement 18 du compteur 1 (qui se trouve en dehors de la cuve 10) par les fils 59.

Le capteur de pression différentielle 56 permet de mesurer l'évolution de la perte de charge.

Durant la calibration du compteur 1, à la fin de sa fabrication, on acquiert une première mesure de pression P1 réalisée par la première cellule sensible et une deuxième mesure de pression P2 réalisée par la deuxième cellule sensible et ce, pour plusieurs valeurs de débit. On calcule alors la perte de charge (ΔP : P1-P2) correspondante pour chaque valeur de débit.

Ces valeurs de perte de charge ΔP seront utilisées comme référence pour pouvoir suivre l'évolution de la perte de charge durant la vie du compteur 1.

À titre d'exemple, la perte de charge de référence ΔP0 à 10000 l/h, mesurée durant la calibration du compteur 1, est par exemple égale 1 mbar.

Si le filtre 12 s'encrasse avec le temps, cette perte de charge va donc augmenter et risque de dépasser un seuil de référence (exemple : ΔP = 2 mbar)
Cette information pourra être utilisée pour alerter le client sur la qualité de son réseau et sur le risque d'encrassement et de chute de pression dans le compteur 1.

L'unité de traitement 18 compare avec un seuil de référence une différence de pression entre une première mesure de pression produite par la première cellule sensible et une deuxième mesure de pression produite par la deuxième cellule sensible, et produit un message d'alarme si la différence de pression est supérieure audit seuil de référence.

Bien entendu, l'invention n'est pas limitée au mode de réalisation décrit mais englobe toute variante entrant dans le champ de l'invention tel que défini par les revendications.

La forme du filtre et celle des différents éléments le constituant (enveloppes, orifices, moyens de fixation, média filtrant, etc.) peuvent bien sûr être différentes de celles décrites ici.

Lorsque le filtre est intégré dans le compteur, son axe longitudinal n'est pas nécessairement positionné verticalement ; il pourrait être incliné par rapport à la verticale.

Les matériaux utilisés pour le média filtrant et le boîtier peuvent être différents de ceux décrits ici.

## Revendications

1. Filtre anti-poussière (12), agencé pour être installé dans un compteur de gaz (1) en amont d'un module de mesure (16) mesurant un débit d'un gaz, le filtre (12) comportant un boîtier (20) à l'intérieur duquel sont définies une première chambre (23) et une deuxième chambre (24), la première chambre étant située au-dessus de la deuxième chambre lorsque le filtre est installé dans le compteur, le boîtier comprenant un orifice d'entrée (28) et des orifices de sortie (34) pratiqués au niveau de la première chambre, un média filtrant (50) étant installé dans la première chambre, le filtre étant ainsi agencé de sorte que, lorsqu'il est installé dans le compteur, le gaz pénètre dans le filtre via l'orifice d'entrée, passe dans le média filtrant, et sort du filtre via les orifices de sortie, des particules de poussière contenues dans le gaz se déposant alors sur un fond de la deuxième chambre (24), le boîtier (20) comprenant une première enveloppe (21) à l'intérieur de laquelle est située la première chambre (23) et une deuxième enveloppe (22) à l'intérieur de laquelle est située la deuxième chambre (24), qui sont fixées l'une à l'autre, la première enveloppe comprenant une face supérieure (26) dans laquelle est formé l'orifice d'entrée (28), et le filtre étant caractérisé en que la première enveloppe (21) comprend une première portion (27), de forme générale cylindrique, dans laquelle sont formés les orifices de sortie (34).

2. Filtre anti-poussière selon la revendication 1, le média filtrant (50) ayant une forme tubulaire comprenant une portion centrale évidée et présentant un axe longitudinal confondu avec un axe longitudinal du filtre, la deuxième enveloppe (22) comprenant une deuxième portion (40), de forme générale cylindrique, et une face inférieure (41) formant le fond de la deuxième chambre (24), la deuxième enveloppe comprenant de plus une pluralité de branches (43) qui s'étendent depuis une circonférence d'une extrémité (49) de la deuxième portion (40) opposée à la face inférieure (41), les branches étant parallèles à un axe longitudinal du filtre, le filtre étant agencé, lorsqu'il est assemblé, de sorte que les branches s'étendent dans la portion centrale évidée du média filtrant en comprimant le média filtrant contre une paroi interne de la première portion (27) de la première enveloppe (21).

3. Filtre anti-poussière selon l'une des revendications précédentes, la première enveloppe (21) comprenant des languettes (36), formées dans l'épaisseur de la première portion (27) et selon une longueur de celle-ci, chaque languette s'étendant depuis la face supérieure (26) de la première enveloppe (21) jusqu'à une extrémité de la première enveloppe opposée à la face supérieure, l'extrémité libre de chaque languette comprenant un crochet (37) permettant de fixer la première enveloppe et la deuxième enveloppe par emboîtage élastique.

4. Filtre anti-poussière selon la revendication 3, dans lequel les orifices de sortie (34) comprennent des premiers orifices (34a) adjacents aux languettes (36), et des deuxièmes orifices (34b) non adjacents aux languettes, les premiers orifices étant plus larges que les deuxièmes orifices.

5. Filtre anti-poussière selon la revendication 3, dans lequel ladite extrémité (49) de la deuxième portion (40) a une forme en collerette comprenant des trous (46) dans lesquels pénètrent les crochets (37) des languettes (36) de la première enveloppe (21).

6. Filtre anti-poussière selon l'une des revendications précédentes, dans lequel la face supérieure (26) du boîtier comporte une nervure (29) qui entoure l'orifice d'entrée (28) et qui est munie d'excroissances radiales (30) agencées pour fixer le filtre dans le compteur (1) via un montage à baïonnette.

7. Filtre anti-poussière selon l'une des revendications précédentes, comprenant en outre un aimant (52) positionné sur le fond de la deuxième chambre (24) et agencé pour attirer des particules de poussières métalliques.

8. Filtre anti-poussière selon l'une des revendications précédentes, le boîtier (20) étant fabriqué en polyoxyméthylène.

9. Filtre anti-poussière selon l'une des revendications précédentes, le média filtrant (50) étant un média polyester.

10. Compteur de gaz comprenant un module de mesure (16) agencé pour mesurer un débit d'un gaz, et un filtre anti-poussière (12) selon l'une des revendications précédentes, le filtre étant installé en amont du module de mesure de sorte que tout le gaz qui pénètre dans le module de mesure a été préalablement filtré par le filtre.

11. Compteur de gaz selon la revendication 10, comprenant un connecteur d'entrée (5) par lequel entre le gaz dans le compteur et un connecteur de sortie (6) par lequel sort le gaz du compteur, le compteur étant agencé de sorte que, lorsque le compteur est installé dans une position nominale, le connecteur d'entrée et le filtre s'étendant successivement de haut en bas selon un axe vertical (X1), un conduit de mesure (17) du module de mesure (16) et le connecteur de sortie (6) s'étendant successivement de bas en haut selon un deuxième axe vertical (X2).

12. Compteur de gaz selon la revendication 11, comprenant en outre une vanne électromécanique (11) positionnée entre le connecteur d'entrée (5) et le filtre (12), à laquelle est fixée le filtre.

13. Compteur de gaz selon l'une des revendications 10 à 12, comportant en outre un dispositif de mesure de pression (54) comprenant un boîtier (55) à l'intérieur duquel est intégré un capteur de pression différentielle (56), le boîtier comprenant un premier port de pression (57) débouchant dans la deuxième chambre (24) du filtre (12) et un deuxième port de pression (58) débouchant dans une cuve (10) du compteur à l'extérieur du filtre.

14. Compteur selon la revendication 13, le compteur comprenant une unité de traitement (18) agencée pour comparer avec un seuil de référence une différence de pression entre une première mesure de pression produite par une première cellule sensible du capteur de pression différentielle (56) qui est en communication fluidique avec la deuxième chambre (24) via le premier port de pression (57) et une deuxième mesure de pression produite par une deuxième cellule sensible du capteur de pression différentielle (56) qui est en communication fluidique avec la cuve (10) via le deuxième port de pression (58), et pour produire un message d'alarme si la différence de pression est supérieure audit seuil de référence.

## Patentansprüche

1. Staubfilter (12) für den Einbau in einen Gaszähler (1) stromaufwärts eines Messmoduls (16) zur Durchflussmessung eines Gases, wobei der Filter (12) ein Gehäuse (20) enthält, in welchem eine erste Kammer (23) und eine zweite Kammer (24) definiert sind, wobei sich die erste Kammer oberhalb der zweiten Kammer befindet, wenn der Filter in dem Zähler eingebaut ist, wobei das Gehäuse eine Einlassöffnung (28) und Auslassöffnungen (34), die im Bereich der ersten Kammer ausgebildet sind, umfasst, wobei ein Filtermedium (50) in der ersten Kammer eingebaut ist, wobei der Filter somit derart ausgelegt ist, dass, wenn er in dem Zähler eingebaut ist, das Gas über die Einlassöffnung in den Filter eintritt, das Filtermedium durchströmt und über die Auslassöffnungen aus dem Filter austritt, währenddessen sich im Gas enthaltene Staubpartikel auf einem Boden der zweiten Kammer (24) absetzen, wobei das Gehäuse (20) zwei aneinander fixierte Hüllen umfasst, eine erste Hülle (21), in deren Innerem sich die erste Kammer (23) befindet, und eine zweite Hülle (22), in deren Innerem sich die zweite Kammer (24) befindet, wobei die erste Hülle eine Oberseite (26) umfasst, in welcher die Einlassöffnung (28) ausgebildet ist, und wobei der Filter **dadurch gekennzeichnet ist, dass** die erste Hülle (21) einen im Allgemeinen zylindrisch ausgebildeten, ersten Abschnitt (27) umfasst, in welchem die Auslassöffnungen (34) ausgebildet sind.

2. Staubfilter nach Anspruch 1, wobei das Filtermedium (50) eine rohrförmige Form mit einem hohlen Mittelteil aufweist und eine Längsachse besitzt, die mit einer Längsachse des Filters zusammenfällt, wobei die zweite Hülle (22) einen im Allgemeinen zylindrisch ausgebildeten, zweiten Abschnitt (40) und eine den Boden der zweiten Kammer (24) bildende Unterseite (41) umfasst, wobei die zweite Hülle ferner eine Mehrzahl von Schenkeln (43) umfasst, die sich über den Umfang hinweg von einem der Unterseite (41) entgegengesetzten Ende (49) des zweiten Abschnitts (40) weg erstrecken, wobei die Schenkel parallel zu einer Längsachse des Filters verlaufen, wobei der Filter derart ausgelegt ist, dass sich in seinem zusammengebauten Zustand die Schenkel in den hohlen Mittelteil des Filtermediums hinein erstrecken und dabei besagtes Filtermedium an eine Innenwand des ersten Abschnitts (27) der ersten Hülle (21) andrücken.

3. Staubfilter nach einem der vorhergehenden Ansprüche, wobei die erste Hülle (21) Laschen (36) umfasst, die in der Dicke des ersten Abschnitts (27) und gemäß einer Länge desselben ausgebildet sind, wobei sich jede Lasche von der Oberseite (26) der ersten Hülle (21) aus bis zu einem der Oberseite entgegengesetzten Ende der ersten Hülle erstreckt, wobei das freie Ende jeder Lasche einen Haken (37) umfasst, der dazu dient, die erste Hülle und die zweite Hülle durch eine elastische Schnappverbindung aneinander zu fixieren.

4. Staubfilter nach Anspruch 3, wobei die Auslassöffnungen (34) an die Laschen (36) angrenzende, erste Öffnungen (34a) und an besagte Laschen nicht angrenzende, zweite Öffnungen (34b) umfassen, wobei die ersten Öffnungen breiter als die zweiten Öffnungen ausgebildet sind.

5. Staubfilter nach Anspruch 3, wobei das Ende (49) des zweiten Abschnitts (40) eine kragenartige Form mit Löchern (46) aufweist, in welche die Haken (37) der Laschen (36) der ersten Hülle (21) einschnappen.

6. Staubfilter nach einem der vorhergehenden Ansprüche, wobei die Oberseite (26) des Gehäuses eine Rippe (29) enthält, welche die Einlassöffnung (28) umgibt und mit radialen Vorsprüngen (30) versehen ist, die dafür ausgelegt sind, den Filter durch einen Bajonettverschluss in dem Zähler (1) zu befestigen.

7. Staubfilter nach einem der vorhergehenden Ansprüche, ferner umfassend einen Magneten (52), der an dem Boden der zweiten Kammer (24) positioniert ist und dafür ausgelegt ist, metallische Staubpartikel anzuziehen.

8. Staubfilter nach einem der vorhergehenden Ansprüche, wobei das Gehäuse (20) aus Polyoxymethylen gefertigt ist.

9. Staubfilter nach einem der vorhergehenden Ansprüche, wobei es sich bei dem Filtermedium (50) um ein Polyestermedium handelt.

10. Gaszähler umfassend ein Messmodul (16) zur Durchflussmessung eines Gases und einen Staubfilter (12) nach einem der vorhergehenden Ansprüche, wobei der Filter stromaufwärts des Messmoduls (16) eingebaut ist, sodass das gesamte Gas, das in das Messmodul einströmt, zuvor von dem Filter gefiltert worden ist.

11. Gaszähler nach Anspruch 10, umfassend einen Einlassverbinder (5), über welchen das Gas in den Zähler eintritt, und einen Auslassverbinder (6), über welchen das Gas aus dem Zähler austritt, wobei der Zähler derart ausgelegt ist, dass, wenn der Zähler in einer Nennposition eingebaut ist, sich der Einlassverbinder und der Filter entlang einer Vertikalachse (X1) hintereinander von oben nach unten erstrecken während sich eine Messleitung (17) des Messmoduls (16) und der Auslassverbinder (6) entlang einer zweiten Vertikalachse (X2) hintereinander von unten nach oben erstrecken.

12. Gaszähler nach Anspruch 11, ferner umfassend ein zwischen dem Einlassverbinder (5) und dem Filter (12) positioniertes elektromechanisches Ventil (11), an welchem der Filter befestigt ist.

13. Gaszähler nach einem der Ansprüche 10 bis 12, ferner enthaltend eine Druckmesseinrichtung (54), die ein Gehäuse (55) mit integriertem Differenzdrucksensor (56) umfasst, wobei das Gehäuse einen in die zweite Kammer (24) des Filters (12) mündenden, ersten Druckanschluss (57) und einen in einen Behälter (10) des Zählers außerhalb des Filters mündenden, zweiten Druckanschluss (58) umfasst.

14. Gaszähler nach Anspruch 13, wobei der Zähler eine Verarbeitungseinheit (18) umfasst, die dafür ausgelegt ist, eine Druckdifferenz zwischen einem ersten Druckmesswert, der von einer ersten empfindlichen Zelle des Differenzdrucksensors (56) erzeugt wird, welche über den ersten Druckanschluss (57) in Fluidverbindung mit der zweiten Kammer (24) steht, und einem zweiten Druckmesswert, der von einer zweiten empfindlichen Zelle des Differenzdrucksensors (56) erzeugt wird, welche über den zweiten Druckanschluss (58) in Fluidverbindung mit dem Behälter (10) steht, mit einem Referenzschwellenwert zu vergleichen und eine Alarmmeldung zu erzeugen, wenn die Druckdifferenz besagten Referenzschwellenwert übersteigt.

## Claims

1. Dust filter (12), arranged to be installed in a gas meter (1) upstream of a measuring module (16) that measures a flow rate of a gas, the filter (12) comprising a housing (20) inside which a first chamber (23) and a second chamber (24) are defined, the first chamber being located above the second chamber when the filter is installed in the meter, the housing comprising an inlet opening (28) and outlet openings (34) formed at the first chamber, a filtering medium (50) being installed in the first chamber, the filter being arranged such that, when installed in the meter, gas enters the filter via the inlet opening, passes through the filtering medium, and exits the filter via the outlet openings, dust particles contained in the gas being then deposited on the base of the second chamber (24), the housing (20) comprising a first casing (21) inside which the first chamber (23) is located and a second casing (22) inside which the second chamber (24) is located, which are secured to each other, the first casing comprising an upper side (26) wherein the inlet opening (28) is formed, the filter being **characterized in that** the first casing (21) comprises a first portion (27), of general cylindrical shape, wherein the outlet openings (34) are formed.

2. Dust filter according to claim 1, the filtering medium (50) having a tubular shape comprising a hollow central portion and having a longitudinal axis that coincides with a longitudinal axis of the filter, the second casing (22) comprising a second portion (40), of general cylindrical shape, and a lower side (41) forming the base of the second chamber (24), the second casing further comprising a plurality of branches (43) extending from a circumference of an end (49) of the second portion (40) opposite the lower side (41), the branches being parallel to a longitudinal axis of the filter, the filter being arranged, when assembled, such that the branches extend into the hollow central portion of the filtering medium by compressing the filtering medium against an inner wall of the first portion (27) of the first casing (21).

3. Dust filter according to any one of the preceding claims, the first casing (21) comprising tabs (36) formed within the thickness of the first portion (27) and along a length thereof, each tab extending from the upper side (26) of the first casing (21) to an end of the first casing opposite the upper side, the free end of each tab comprising a hook (37) making it possible to secure the first casing and the second casing by a snap-fit system.

4. Dust filter according to claim 3, wherein the outlet openings (34) comprise first openings (34a) adjacent to the tabs (36), and second openings (34b) not adjacent to the tabs, the first openings being wider than the second openings.

5. Dust filter according to claim 3, wherein said end (49) of the second portion (40) has a collar shape comprising holes (46) into which the hooks (37) of the tabs (36) of the first casing (21) engage.

6. Dust filter according to any one of the preceding claims, wherein the upper side (26) of the housing has a groove (29) that surrounds the inlet opening (28) and that is provided with radial projections (30) arranged to secure the filter in the meter (1) via a bayonet mounting.

7. Dust filter according to any one of the preceding claims, further comprising a magnet (52) positioned on the base of the second chamber (24) and arranged to attract metal dust particles.

8. Dust filter according to any one of the preceding claims, the housing (20) being made of polyoxymethylene.

9. Dust filter according to any one of the preceding claims, the filter medium (50) being a polyester medium.

10. Gas meter comprising a measuring module (16) arranged to measure a flow rate of a gas, and a dust filter (12) according to one of the preceding claims, the filter being installed upstream of the measuring module so that all the gas entering the measuring module has been previously filtered by the filter.

11. Gas meter according to claim 10, comprising an inlet connector (5) through which gas enters the meter and an outlet connector (6) through which gas exits the meter, the meter being arranged such that when the meter is installed in a nominal position, the inlet connector and the filter extend successively from top to bottom along a vertical axis (X1), a measuring duct (17) of the measuring module (16) and the outlet connector (6) extending successively from bottom to top along a second vertical axis (X2).

12. Gas meter according to claim 11, further comprising an electromechanical valve (11) positioned between the inlet connector (5) and the filter (12), to which the filter is secured.

13. Gas meter according to any one of claims 10 to 12, further comprising a pressure measuring device (54) comprising a housing (55) inside which a differential pressure sensor (56) is integrated, the housing comprising a first pressure port (57) opening into the second chamber (24) of the filter (12) and a second pressure port (58) opening into a tank (10) of the meter outside the filter.

14. Meter according to claim 13, the meter comprising a processing unit (18) arranged to compare, with a reference threshold, a pressure difference between a first pressure measurement produced by a first sensitive cell of the differential pressure sensor (56) that is in fluid communication with the second chamber (24) via the first pressure port (57) and a second pressure measurement produced by a second sensitive cell of the differential pressure sensor (56) that is in fluid communication with the tank (10) via the second pressure port (58), and to produce an alarm message if the pressure difference is greater than said reference threshold.
